# EUROPEAN PATENT SPECIFICATION

(11) **EP 4 126 302 B1**
(45) Date of publication and mention of the grant of the patent: **28.02.2024**
(21) Application number: 21723436.8
(22) Date of filing: 24.03.2021
(51) Int. Cl.: E21B 21/06, B01D 21/06, B01D 47/00

(54) **PARTICLE-POLLUTED OIL WATER GAS SCRUBBER**
WÄSCHER FÜR PARTIKELBELASTETES ÖL- UND WASSERGAS
ÉPURATEUR AMÉLIORÉ POUR GAZ HUILE/EAU POLLUÉ PAR DES PARTICULES

(30) Priority: 24.03.2020 NO 20200347
(43) Date of publication of application: 08.02.2023
(73) Proprietor: EAGLE TECHNOLOGY AS, 4014 Stavanger (NO)
(72) Inventor: SAMUELSEN, Ørjan Weider, 4044 Hafrsfjord (NO); AUSLAND, Tore, 1555 Son (NO); RANDA, Bent Atle, 9925 Svanvik (NO)
(74) Representative: Acapo AS
(86) International application number: PCT/NO2021/050079
(87) International publication number: WO 2021/194353

(56) References cited:
- EP-A1- 0 346 301
- WO-A1-2012/104700
- CN-A- 110 876 872
- CN-U- 202 645 945
- US-A- 2 354 674
- US-A- 4 968 335

## Description

### Introduction

The invention is a scrubber for fine particle polluted oil / water gas. More specifically, the invention is a scrubber for fine particle polluted oil / water gas from a sludge separator.

### Background art and problems related thereto

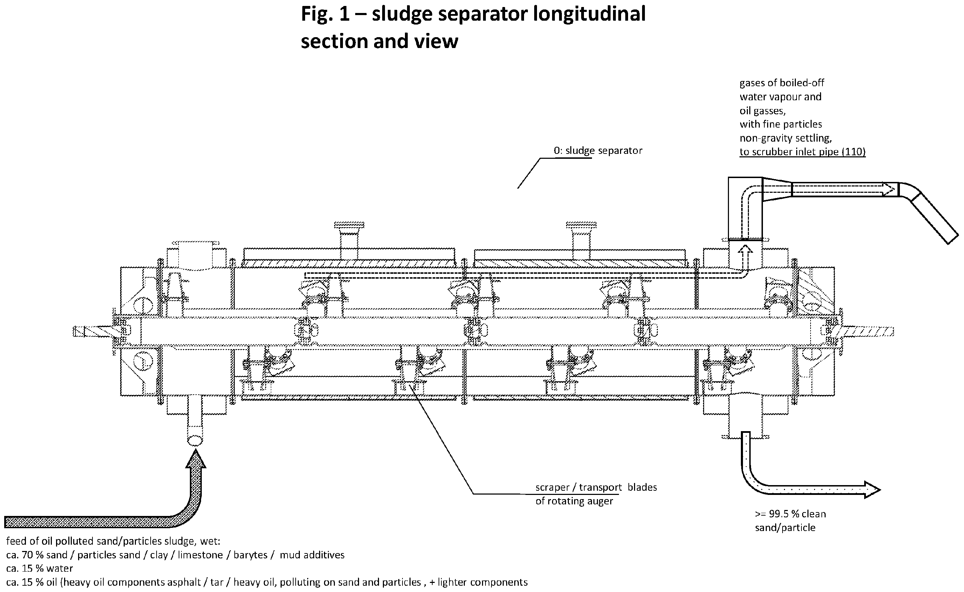

Petroleum drilling results in wet waste sludge which is polluted by oil remains in large amounts for each well drilled, and is considered a problematic waste. One solution is to feed it into screw feed separators, particularly such as the applicant's own sludge separator (0). In these screw separators we feed in the oil polluted sand/particles in wet sludge, wherein it roughly contains ca. 70 % sand particles of sand / clay / limestone / barytes / mud additives; ca. 15 % water, and ca. 15 % oil, that is, mainly light oil components, polluting on sand and particles, and not very much heavy oil components. Such a separator (0), which is a preceding stage to the present invention, is a separator, please see **Fig. 1****,** for the oil- and water wet polluted sand sludge, is arranged with a transport screw kneader and heating to dry out the sludge and drizzle out dried oil-free sand and releasing hot oil and gas vapours to be further treated in the gas scrubber of the present invention. A significant problem is to remove the fine fraction of the particles arising from the drying and kneading process in the separator. The fine particles travel in the gas (111) of oil and water vapour from an oil/water sand sludge separator. Those fine particles undesirably are not settling by gravity in the separator chamber. If the fine particle containing oil gas and water gas from the sludge separator is run directly into an oil / water separator, the resulting liquids formed which will then contain fine particles and thus not constitute useful recycled fluids. The particles will be a pollution which is abrasive or clogging or otherwise prevent further use of the recycled fluids and requires other treatment of a large throughput of fluids.

In the background art, US patent 2 356 674 A relates to improvements in air and gas washers and allied equipment such as scrubbing towers, contact columns, absorption towers and the like. Further it is described how to providing efficient means for more perfect and simultaneous contact of the gases to be treated or cleaned and the contact liquid with impingement surfaces located in the path of the gases being treated and to accomplish this result with a minimum of resistance to the flow of gases through the device.

Further, US patent 4 968 335 A relates to a gas absorption tower, such as a desulfurization tower, which absorbs or removes a certain component such as sulfur dioxide or sulfur oxides from flue gas (waste gas) from a boiler.

Further prior art is the European patent application 346 301 A1 which relates to a filter for separation of oily fumes from the air in e.g. a workshop and the Chinees utility model 202 645 945 U that describes a cyclone agglutination combined separator used before a natural gas compressor. The cyclone agglutination combine separator has the advantages of high impurity rate.

Another prior art is the Chinees patent 110 846 872 A that describes a gas-liquid separator and a gas-liquid separation method. The patent describes further a separator provided with a gas-liquid separator cylinder, which is internally provided with a spiral separator and how its are connected inside the separator.

### Figure Captions

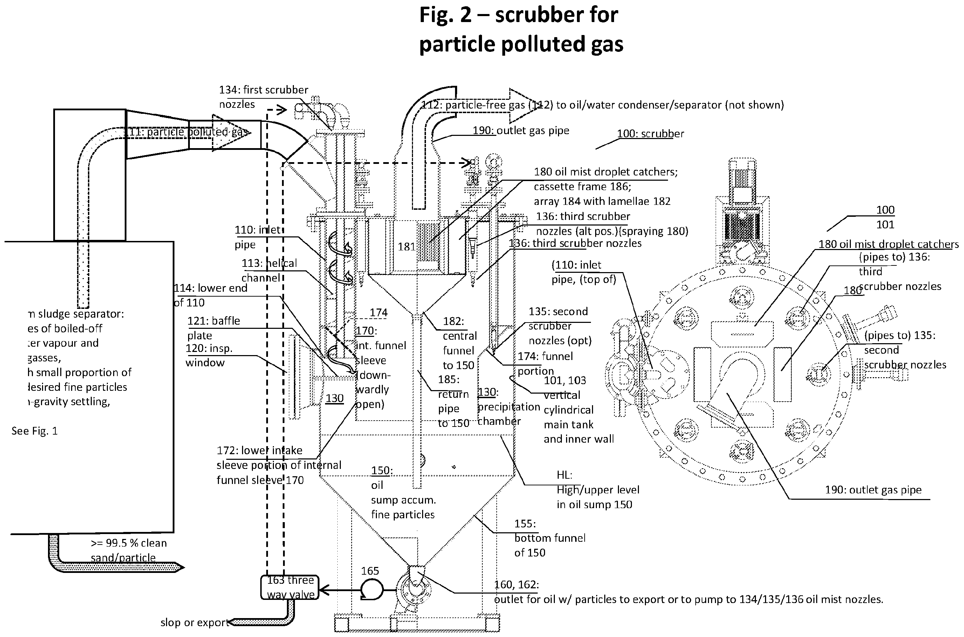

**Fig. 1** is a vertical longitudinal section and partial view of a sludge separator (0) which is described as being used in a preceding step to the scrubber of the present invention. Other sludge separators may be used in connection with the present invention. The scrubber receives the gases of boiled-off water vapour and oil gasses, with fine particles which are non-gravity settling in the gas, the gases are fed to the to scrubber inlet pipe (110) described in context of **Fig. 2****.** In the screw separator we feed in the oil polluted sand/particles in wet sludge, please see the feed inlet at the lower left, wherein the feed roughly contains ca. 70 % sand particles of sand / barytes / metal; ca. 15 % water, and ca. 15 % oil, that is, heavy oil components asphalt / tar / heavy oil, polluting on sand and particles, and lighter components. The feed is auger-conveyed and kneaded by angled blades rotating very near the periphery inside tank, while being heated, and the very dry, clean particles of sand and other solid material is fed out through an air valve at the lower right end and conveyed away. Lead is melted and will convection circulate within the double-walled annulus of the horizontal tank which is heated from below. The melted lead is a relatively poor heat conductor, but it transports heat very efficiently to the inner tank due to the convection of melted lead. The purity of the resulting dry, clean "sand" particle is more than or equal to 99.5%, i.e. a very small oil proportion remains in or on some of the grains. So the separation in our own sludge separator (0) is a very efficient and continuous process for separating drilling sludge. Other sludge separators may be used in connection with the present invention, and as they have less efficiency than about 99.5% removal of particles, other separators would make even more use of the present invention.
**Fig. 2** is a vertical section and partial view of a scrubber according to the invention, with inlet (110) for the particle polluted oil and water gas shown in the upper left portion. An overly simplified illustration of the sludge separator is illustrated to the left. A top view of the scrubber is shown to the right. The outlet gas pipe (190) conducts generally particle-free oil and water gases to an oil-water condenser and separator (not illustrated).

### Brief summary of the invention

The invention and embodiments of it are defined in the claims.

### Embodiments of the invention

The invention is illustrated in Fig. 2, in context with Fig. 1, and provides an improved scrubber (100) for fine particles polluted gas (111) of oil and water vapour. The fine particle polluted gas (111) is in this context received from an oil/water sand sludge separator, e.g. a separator (0) of the type illustrated in Fig. 1. The improved scrubber of the invention comprises:
- a vertical cylindrical main tank (101) with an inlet pipe (110) for said fine particle polluted gas (111) towards
- a precipitation chamber (130) in said main tank (101), for precipitation of oil droplets with fine particles from said gas (111) in a lower portion of said main tank (101) to
- an oil sump (150) for receiving said precipitated oil droplets and holding oil with said fine particles, said oil sump (150) having a bottom funnel (155) with an oil outlet (160).
- Further, the scrubber of the invention has an internal funnel sleeve (170) extending from a lower intake sleeve portion (172) above an upper level (HL) in said oil sump (150), and an upward widening funnel portion (174) connecting said intake sleeve portion (172) to an inner wall surface (103) of said main tank (101). Thus the upward funnel portion (174) widens said internal funnel sleeve (170) to full main tank (101). Oil droplets may precipitate out of the gas (111) also here, and run down into the sump (150).
- Further, there is an oil mist catcher (180) arranged between said internal funnel sleeve (170) and
- an outlet gas pipe (190) for a resulting more or less particle-free gas (112) at the top of said oil mist catcher (180), and
- said oil mist catcher (180) is arranged for draining oil caught down trough a central funnel (182) into said oil sump (150), wherein
- said inlet pipe (110) comprises a centrifuge-effect helical channel (113), and a lower end (114) of said inlet pipe (110) extending down into said precipitation chamber (130) and above the upper level (HL) of the oil sump (150).

The particle free oil gas and water gas from the outlet gas pipe (190) is run further into an oil/water separator (not shown) to form the resulting liquids which will then be particle free and thus useful recycled fluids. Such separators exist in the background art.

The scrubber of the present invention solves the significant problem of removing the fine fraction of the particles arising from the drying process in the preceding separator.

The centrifuge-effect helical channel (113) is arranged for setting the inlet gas flow (111) into rotation in order for separating part of the oil droplets onto its inner wall of the inlet pipe (110), and for leading gas with reduced oil content closer to center, and a lower end (114) of said inlet pipe (110) extending down into said precipitation chamber (130), preferably toward a baffle plate (121), please see Fig. 2, wherein said precipitation chamber the flow cross section widens several times and thus gas speed is slowed correspondingly, wherein the gas flow (111) distributes above the oil level, and at least above the upper level (HL), of the oil sump (150).

In an embodiment of the invention, the outlet pipe at the top of the preceding step, the separator (0) chamber, by the end of the kneading screw, is of large diameter, 600 mm, in order to generate a relatively low initial gas velocity in order not to carry up and away much fine particles, but despite efforts for not to carry along fine particles, some fine particles such as silt and clay particles follow the gas flow. In order to transport out those fine particles from the top of the e.g. 600 mm wide pipe, we reduce the outlet to e.g. a 300 mm funnel further to an e.g. 200 mm outlet pipe. In the calculated example we thus increase the gas speed by (6/2)^2=36/4=18 times, thus increasing the speed of the gas up to 18 m/s to the intake pipe (110). The purpose of having higher speed is to cyclone separate out some of the droplets from the gas (111) which will carry some of the particles, as the gas (111) runs down the helical channel (113) of the intake pipe (110).

The preceding stage is a separator such as the separator (0) for oil- and water wet polluted sand sludge arranged with a transport screw kneader and heating to dry out the sludge and drizzle out dried oil-free sand and releasing hot oil and gas vapours to be further treated in the gas scrubber of the present invention. It necessarily produces some fine particles as the friction and heating, auger kneading and resulting drying process makes an increasingly fine particle-containing dry clean sand towards the end of the auger conveyor. This fine dust does not settle totally to the dry sand outlet at the end of the auger.

In an embodiment of the invention , the precipitation chamber (130) and at least a portion of said oil sump (150) have the full diameter of said cylindrical main tank (101), please see Fig. 2. The upper level (HL) of oil should be controlled not to exceed above the lower end of the internal funnel sleeve (170), which end the fines depleted oil mist (111) passes from the precipitation chamber, wherein the second scrubber nozzles (135) are, and up to the wide, internal funnel sleeve (170). The upper part of the central funnel sleeve (170) may have the full width of said main tank (101), please see Fig. 2.

The oil sump (150) may be drained to keep it below the upper level (HL) in several ways and for two main purposes: return to the sludge pit, or for scrubbing the incoming particle polluted gas (111). In an embodiment of the invention the oil outlet (160) is connected to a return oil pipe (162) with a pump (165) *for particle polluted oil from sump (150) back to a sludge pit of the sludge separator* and or to one or more of first, second or third scrubber nozzles (134) in said intake pipe (110) or in the tank, respectively, for initiating droplet precipitation from said gas (111) in said intake pipe (110) or in said tank (101).

In an embodiment of the invention, about 50 m3/h of oil is returned to one or more of the scrubber nozzles (134, 135, 136), the remainder may go to return to the sludge pit, or also it may be exported if the fine particle contents is sufficiently low, or it may be burned to run an electrical generator for running the separator and pumps and heating of the separator, if allowable by local regulations.

In an embodiment of the invention the return oil pipe (162) is connected to a three way valve (163) for selectively controlling the return of oil to said sludge pit or to said first, second, or third scrubber nozzles (134, 135, 136) or both.

In a further embodiment of the invention, the oil mist catcher (180) comprises an array of oil mist catcher lamellae (186) arranged in a lamellae array (184) in a cassette frame (186) for being passed-through by gas (111) from funnel sleeve (170) to form particle depleted oil / water vapour gas (112) to said outlet pipe (190). This particle depleted oil / water gas will then be forwarded to an oil / water condenser / separator (not shown) which cools and separates oil and water. This oil and water, respectively, may be exported from the oil / water condenser / separator, whereof the oil may be sold or recycled, and the water is sufficiently clean so as for being used in technical processes or dumped.

In an embodiment of the invention, the oil mist catcher (180) is arranged in a central mist catcher chamber (181) arranged in and above the top portion of said funnel sleeve (170), please see the middle portion of Fig. 2 and also the top view shown at the right side of Fig. 2. In the embodiment shown in Fig. 2 this central mist catcher chamber (181) is cylindrical and arranged in the wider top portion of said internal funnel sleeve (170).

In an embodiment of the invention the central mist catcher chamber (181) has a central oil drain funnel (182) and a central drain return pipe (185) extending down into the oil sump (150) to below the surface of the oil sump (150) and below lower level (LL). As the oil caught in the central drain return pipe would necessarily be very near particle-free and at least cleaner than the oil precipitated directly into the oil sump (150), the return pipe (185) could alternatively lead to export only.

In an embodiment of the invention the oil outlet (160) is connected to second scrubber nozzles (135) arranged in said precipitation chamber (130). These scrubber nozzles would spray fine oil droplets scrubbing the gas (111) in the precipitation chamber (130) and further deplete the gas (111) for fine particles, and lead much of the droplets to the sump (150).

In an embodiment of the invention, said oil outlet (160) is connected to third scrubber nozzles (136) arranged in said internal funnel (170), preferably high up in the wider part of the central funnel (170), as shown in Fig. 2. Those third scrubber nozzles (136) would scrub the oil mist for a third time and much of the fine particle - polluted oil droplets would then settle in the central funnel (170), and most of the rest of the fine particle polluted oil droplets would settle in the subsequent oil mist droplet catchers (180). The third scrubber nozzles (136) may in an embodiment of the invention be arranged in a position adjacent to the oil mist droplet catchers (180) so as for spray flushing them clean and preventing clogging of the oil mist droplet catchers. In an embodiment of the invention, some of the third scrubber nozzles (136) may be arranged for spraying towards the oil mist droplet catchers (180) and some of them arranged for not spraying towards the oil mist droplet catchers. In an embodiment of the invention, those directed towards the oil mist droplet catchers (180) may be controlled to spray towards the oil mist catchers when needing to flush them clean.

### Component list

| **reference numeral** | **component** | **context/comment** |
|---|---|---|
| 100 | Scrubber | |
| 111 | (particle polluted water/oil gas from separator) | gas fed to scrubber |
| 101 | vertical cylindrical main tank | |
| 110 | inlet pipe | |
| 112 | particle-free gas to oil/water separator | |
| 113 | helical channel | in inlet pipe 110, generates rotation in the propagating gas mass, centrifuges oil droplets with oil wet particles to the outer wall and "clean" gas in the middle. |
| 120 | inspection window at outlet of inlet pipe | |
| 121 | baffle plate | after outlet of inlet pipe (110) |
| | | |
| 130 | precipitation chamber | for precipitation of oil droplets with fine particles from said gas (111) in a lower portion of said main tank (101) |
| | | |
| 134 | first oil mist injector, in inlet pipe | injects oil mist to the inlet pipe (110) ahead of the helical channel 113 |
| 135 | second oil mist injector in outer annulus | injects oil mist into the precipitation chamber 130 |
| 136 | third oil mist injector in inner annulus | injects oil mist into the upward flowing gas in the wide internal funnel sleeve 170, ahead of the |
| 150 | oil sump | |
| 155 | bottom funnel | |
| | | |
| | | |
| 170 | internal funnel sleeve | separates the precipitation chamber 130 which is an inlet chamber above the oil sump 150 which keeps the caught particles in the oil bath, from the upward travelling oil droplet mist going to the oil mist catcher 180 and further to the outlet gas pipe. |
| | | |
| 180 | oil mist catcher | |
| 181 | oil mist catcher chamber | |
| 182 | central funnel | leads from oil mist chamber 181 back down through return pipe 185 into the oil sump 150 |
| | | |
| 184 | array of lamellae | array of lamellae (187) in oil mist catcher (180). |
| 185 | return pipe from oil mist catcher chamber | from oil mist catcher chamber |
| 186 | cassette frame | for lamellae (187) in cassette frame (184) in oil mist catcher (180) |
| 187 | lamellae | in oil mist catcher (180) in an array (184), optionally in a cassette frame (186). |
| 190 | outlet pipe | for particle-free vapour gas 112 to oil-water condenser / separator |

## Claims

1. An improved scrubber (100) for fine particles polluted gas (111) of oil and water vapour, comprising
- a vertical cylindrical main tank (101) with an inlet pipe (110) for said gas (111) towards
- a precipitation chamber (130) in said main tank (101) for precipitation of oil droplets with fine particles from said gas (111) in a lower portion of said main tank (101) to
- an oil sump (150) for receiving said precipitated oil droplets and holding oil with said fine particles, said oil sump (150) having a bottom funnel (155) with an oil outlet (160),
- an internal funnel sleeve (170) extending from a lower intake sleeve (172) above an upper level (HL) in the oil sump (150), and an upward widening funnel portion (174) connecting said intake sleeve (172) to an inner wall (103) of said main tank (101), thus widening said internal funnel sleeve (170) to full main tank (101) width,
- an oil mist catcher (180) arranged between said internal funnel sleeve (170) and
- an outlet gas pipe (190) for particle-free gas (112) at the top of said oil mist catcher (180),
- said oil mist catcher (180) arranged for draining oil caught down trough a central funnel (182) into said oil sump (150), **characterized by**
- said inlet pipe (110) comprises a centrifuge-effect helical channel (113), and a lower end (114) of said inlet pipe (110) extending down into said precipitation chamber (130) and above the upper level (HL) of the oil sump (150).

2. The scrubber of any of the preceding claims, wherein said precipitation chamber (130) and at least a portion of said oil sump (150) having the full diameter of said cylindrical main tank (101).

3. The scrubber of any of the preceding claims, wherein an upper portion of said internal funnel sleeve (170) has the full width of said main tank (101).

4. The scrubber of any of the preceding claims, wherein
- said oil outlet (160) is connected to a return oil pipe (162) with a pump (165) for particle polluted oil from sump (150) back to a sludge pit of the sludge separator and / or to first scrubber nozzles (134) in said intake pipe (110) for initiating droplet precipitation from said gas (111) in said intake pipe (110).

5. The scrubber of claim 4, wherein said return oil pipe (162) is connected to a three way valve (163) for selectively controlling the return of oil to said sludge pit or to one or more of said first, second or third scrubber nozzles (134. 135, 136) or both.

6. The scrubber of any of the preceding claims, wherein said oil outlet (160) is connected to second scrubber nozzles (135) arranged in said precipitation chamber (130).

7. The scrubber of any of the preceding claims, wherein said oil outlet (160) is connected to third scrubber nozzles (136) arranged in said internal funnel (170).

8. The scrubber of claim 7, wherein one or more of said third scrubber nozzles (136) is arranged for spraying on said oil mist catcher (180).

9. The scrubber of any of the preceding claims, wherein a baffle plate (121) is arranged below a lower end (114) of the inlet pipe (110) inside the scrubber (100).

## Patentansprüche

1. Verbesserter Wäscher (100) für feinpartikelbelastetes Öl- und Wassergas (111), umfassend
- einen vertikalen zylindrischen Haupttank (101) mit einem Einlassrohr (110) für das Gas (111) zu
- einer Präzipitationskammer (130) in dem Haupttank (101) zur Präzipitation von Öltröpfchen mit feinen Partikeln aus dem Gas (111) in einem unteren Abschnitt des Haupttanks (101), zu
- einem Ölsumpf (150) zum Aufnehmen der präzipitierten Öltröpfchen und Halten von Öl mit den feinen Partikeln, wobei der Ölsumpf (150) einen unteren Trichter (155) mit einem Ölauslass (160) aufweist,
- eine innere Trichterhülse (170), die sich von einer unteren Ansaughülse (172) über einem oberen Niveau (HL) in der Ölwanne (150) erstreckt, und einen sich nach oben erweiternden Trichterabschnitt (174), der die Ansaughülse (172) mit einer Innenwand (103) des Haupttanks (101) verbindet, wodurch die innere Trichterhülse (170) auf die volle Breite des Haupttanks (101) erweitert wird,
- einen Ölnebelfänger (180), der zwischen der inneren Trichterhülse (170) und
- einer Auslassgasleitung (190) für partikelfreies Gas (112) an der Oberseite des Ölnebelfängers (180) angeordnet ist,
- wobei der Ölnebelfänger (180) zum Ablassen von abgefangenem Öl durch einen mittleren Trichter (182) in den Ölsumpf (150) angeordnet ist, **dadurch gekennzeichnet, dass**
- das Einlassrohr (110) einen schraubenförmigen Zentrifugeneffektkanal (113) umfasst und sich ein unteres Ende (114) des Einlassrohrs (110) abwärts unten in die Präzipitationskammer (130) und über das obere Niveau (HL) des Ölsumpfs (150) erstreckt.

2. Wäscher nach einem der vorherigen Ansprüche, wobei die Präzipitationskammer (130) und mindestens ein Abschnitt des Ölsumpfs (150) den vollen Durchmesser des zylindrischen Haupttanks (101) aufweisen.

3. Wäscher nach einem der vorherigen Ansprüche, wobei ein oberer Abschnitt der inneren Trichterhülse (170) die volle Breite des Haupttanks (101) aufweist.

4. Wäscher nach einem der vorherigen Ansprüche, wobei:
- der Ölauslass (160) mit einer Ölrücklaufleitung (162) mit einer Pumpe (165) für partikelbelastetes Öl aus dem Sumpf (150) zurück zu einer Schlammwanne des Schlammabscheiders und/oder mit ersten Waschdüsen (134) in der Ansaugleitung (110) verbunden ist, um eine Tröpfchenpräzipitation aus dem Gas (111) in der Ansaugleitung (110) einzuleiten.

5. Wäscher nach Anspruch 4, wobei die Ölrücklaufleitung (162) mit einem Dreiwegeventil (163) zum selektiven Steuern des Rücklaufs von Öl zu der Schlammwanne oder zu einer oder mehreren von der ersten, der zweiten oder der dritten Wäscherdüse (134, 135, 136) oder beidem verbunden ist.

6. Wäscher nach einem der vorherigen Ansprüche, wobei der Ölauslass (160) mit zweiten Wäscherdüsen (135) verbunden ist, die in der Präzipitationskammer (130) angeordnet sind.

7. Wäscher nach einem der vorherigen Ansprüche, wobei der Ölauslass (160) mit dritten Wäscherdüsen (136) verbunden ist, die in dem inneren Trichter (170) angeordnet sind.

8. Wäscher nach Anspruch 7, wobei eine oder mehrere der dritten Wäscherdüsen (136) zum Sprühen auf den Ölnebelfänger (180) angeordnet sind.

9. Wäscher nach einem der vorherigen Ansprüche, wobei eine Ablenkplatte (121) unterhalb eines unteren Endes (114) des Einlassrohrs (110) innerhalb des Wäschers (100) angeordnet ist.

## Revendications

1. Épurateur amélioré (100) pour un gaz (111) pollué par de fines particules à base d'huile et de vapeur d'eau, comprenant
- un réservoir principal cylindrique vertical (101) comportant un tuyau d'entrée (110) pour ledit gaz (111) menant vers
- une chambre de précipitation (130) dans ledit réservoir principal (101) pour la précipitation de gouttelettes d'huile avec les fines particules hors dudit gaz (111) dans une partie inférieure dudit réservoir principal (101) vers
- un carter d'huile (150) destiné à recevoir lesdites gouttelettes d'huile précipitées et à retenir l'huile avec lesdites particules fines, ledit carter d'huile (150) ayant un entonnoir inférieur (155) comportant une sortie d'huile (160),
- un manchon d'entonnoir interne (170) s'étendant à partir d'un manchon d'admission inférieur (172) au-dessus d'un niveau supérieur (HL) dans le carter d'huile (150), et une partie d'entonnoir s'élargissant vers le haut (174) reliant ledit manchon d'admission (172) à une paroi interne (103) dudit réservoir principal (101), élargissant ainsi ledit manchon d'entonnoir interne (170) à la largeur totale du réservoir principal (101),
- un piège à brouillard d'huile (180) agencé entre ledit manchon d'entonnoir interne (170) et
- un tuyau de gaz de sortie (190) pour un gaz exempt de particules (112) au sommet dudit piège à brouillard d'huile (180),
- ledit piège à brouillard d'huile (180) étant agencé pour drainer l'huile récupérée au bas d'un entonnoir central (182) en direction dudit carter d'huile (150), **caractérisé en ce que**
- ledit tuyau d'entrée (110) comprend un canal hélicoïdal à effet centrifuge (113), et une extrémité inférieure (114) dudit tuyau d'entrée (110) s'étendant vers le bas dans ladite chambre de précipitation (130) et au-dessus du niveau supérieur (HL) du carter d'huile (150).

2. Épurateur selon l'une quelconque des revendications précédentes, dans lequel ladite chambre de précipitation (130) et au moins une partie dudit carter d'huile (150) ont le diamètre total dudit réservoir principal cylindrique (101) .

3. Épurateur selon l'une quelconque des revendications précédentes, dans lequel une partie supérieure dudit manchon d'entonnoir interne (170) a la largeur totale dudit réservoir principal (101).

4. Épurateur selon l'une quelconque des revendications précédentes, dans lequel
- ladite sortie d'huile (160) est reliée à un tuyau d'huile de retour (162) comportant une pompe (165) pour l'huile pollué par des particules à partir du carter (150) de retour vers une fosse à boues du séparateur de boues et / ou vers des premières buses d'épurateur (134) dans ledit tuyau d'admission (110) afin de lancer la précipitation de gouttelettes hors dudit gaz (111) dans ledit tuyau d'admission (110).

5. Épurateur selon la revendication 4, dans lequel ledit tuyau d'huile de retour (162) est relié à une vanne à trois voies (163) pour commander sélectivement le retour d'huile vers ladite fosse à boues ou vers une ou plusieurs desdites première, seconde ou troisième buses d'épurateur (134, 135, 136) ou les deux.

6. Épurateur selon l'une quelconque des revendications précédentes, dans lequel ladite sortie d'huile (160) est reliée à des secondes buses d'épurateur (135) agencées dans ladite chambre de précipitation (130).

7. Épurateur selon l'une quelconque des revendications précédentes, dans lequel ladite sortie d'huile (160) est reliée à des troisièmes buses d'épurateur (136) agencées dans ledit entonnoir interne (170).

8. Épurateur selon la revendication 7, dans lequel une ou plusieurs desdites troisièmes buses d'épurateur (136) sont agencées afin de pulvériser sur ledit piège à brouillard d'huile (180).

9. Épurateur selon l'une quelconque des revendications précédentes, dans lequel une plaque déflectrice (121) est agencée en dessous d'une extrémité inférieure (114) du tuyau d'entrée (110) à l'intérieur de l'épurateur (100).
